# EUROPÄISCHE PATENTSCHRIFT

(11) **EP 0 598 368 B1**
(45) Veröffentlichungstag und Bekanntmachung des Hinweises auf die Patenterteilung: **14.02.1996**
(21) Anmeldenummer: 93118428.7
(22) Anmeldetag: 15.11.1993
(51) Int. Cl.: C01B 7/14

(54) **Verfahren zur Wiedergewinnung von Jod**
Process for the recovery of iodine
Procédé de récupération d'iode

(30) Priorität: 19.11.1992 DE 4238915
(43) Veröffentlichungstag der Anmeldung: 25.05.1994
(73) Patentinhaber: Solvay Fluor und Derivate GmbH, D-30173 Hannover (DE)
(72) Erfinder: Herkelmann, Ralf, D-30457 Hannover (DE); Rudolph, Werner, D-30599 Hannover (DE); Seffer, Dirk, D-31535 Neustadt (DE)
(74) Vertreter: Lauer, Dieter, Dr.

(56) Entgegenhaltungen:
- EP-A- 0 002 636
- US-A- 3 352 641
- US-A- 4 131 645

## Beschreibung

Die Erfindung betrifft ein Verfahren zur Wiedergewinnung von Jod aus einer Jod und/oder Jodid enthaltenden Zusammensetzung.

Jod und jodhaltige Verbindungen bzw. Jodide sind in der chemischen Synthese wichtige Katalysatoren oder Ausgangsverbindungen. Entsprechend fallen bei chemischen Syntheseverfahren, z. B. bei der Verwendung von CF₃I als Trifluormethylierungsreagenz, aber auch bei der Abgasbehandlung und bei der Veraschung von Algen, Jod und/oder Jodid enthaltende Zusammensetzungen an. Es ist wünschenswert, aus solchen Zusammensetzungen das Jod zu gewinnen bzw. wiederzugewinnen. Es ist bereits bekannt, zur Rückgewinnung von Jodid in entsprechenden Salzlösungen unter Zusatz von Eisensulfat und Wasserstoffperoxid Jodid zu oxidieren und das gebildete Jod mit Chloroform zu extrahieren. Diese Methode, die von H.H. Weetall und W. Hertl in Inorg. Chim. Acta 104 (1985), Göttingen 119 bzw. 123, beschrieben wird, weist den Nachteil auf, daß die verbleibende Lösung sowohl mit Eisensulfat als auch mit Chloroform verunreinigt ist. Außerdem muß das extrahierte Jod mühselig vom Chloroform getrennt werden.

Aufgabe der vorliegenden Erfindung ist es, ein Verfahren anzugeben, mit welchem sehr reines Jod aus Jod und/oder Jodid enthaltenden Zusammensetzungen abgetrennt werden kann. Diese Aufgabe wird durch das erfindungsgemäße Verfahren gelöst. Das erfindungsgemäße Verfahren zur Wiedergewinnung von Jod aus einer Jod und/oder Jodid enthaltenden Zusammensetzung sieht vor, daß man gegebenenfalls vorhandenes Jod zu Jodid reduziert, das Jodid aus wässriger Lösung mittels eines Jodid selektiv absorbierenden Anionenaustauschers abtrennt, das Jodid vom Anionenaustauscher durch Behandeln mit Lauge eluiert, die das eluierte Jodid enthaltende Lösung mit einem Kationenaustauscher behandelt, bis der pH-Wert kleiner als 4 ist, aus der behandelten Lösung das Jodid mit H₂O₂ zu Jod oxidiert und das gebildete Jod isoliert.

Zur Erhöhung der Ausbeute ist es empfehlenswert, sofern Jod in der Zusammensetzung enthalten ist, dieses vorab, vorzugsweise vollständig, zu reduzieren. Hierzu verwendet man übliche Reduktionsmittel, vorzugsweise Kalziumoxid und Schwefeldioxid, die in der ausreichenden Menge, vorzugsweise der stöchiometrisch notwendigen Menge, zugefügt werden.

Sofern die zu behandelnde Zusammensetzung noch nicht in Form einer wässrigen Lösung vorliegt, setzt man Wasser zu und filtrierte gegebenenfalls. Vorzugsweise stellt man den Gehalt an Jodid in der zu behandelnden wässrigen Lösung auf 10 bis 20 Gew.-% ein.

Als das Jodid selektiv absorbierenden Anionenaustauscher verwendet man vorzugsweise den Anionenaustauscher "Serdolit AWG", Hersteller Firma SERVA. Die Jodidabsorption führt man vorzugsweise bei einem pH-Wert zwischen 6 und 8 durch.

Anschließend eluiert man das am Anionenaustauscher absorbierte Jodid durch Behandeln mit Lauge. Als Lauge kann man wässrige Lösungen alkalisch wirkender Substanzen verwenden, vorzugsweise wässrige Lösungen von Erdalkalimetall- und insbesondere Alkalimetallhydroxiden. Natronlauge mit einer Konzentration von 5 bis 10 Gew.-% NaOH ist besonders gut geeignet.

Das Eluat wird dann mit einem Kationenaustauscher behandelt. Man kann im Prinzip beliebige bekannte Kationenaustauscher verwenden. Besonders gut geeignet ist ein Kationenaustauscher vom Typ "Lewatit", beispielsweise Lewatit S 100, Hersteller Firma Bayer, Leverkusen. Dabei wird der pH-Wert auf 0 bis 4 eingestellt. Die mit dem Kationenaustauscher behandelte Lösung wird dann zweckmäßig auf einen Jodidgehalt von 10 bis 32 Gew.-% eingestellt, beispielsweise durch Eindampfen. Anschließend setzt man Mineralsäure, vorzugsweise Schwefelsäure, zu und oxidiert mit Wasserstoffperoxid. Hierzu kann man Wasserstoffperoxid-Lösungen üblicher Konzentration verwenden. Die Verwendung höher konzentrierter Schwefelsäure bzw. höher konzentrierten Wasserstoffperoxids ist empfehlenswert. Beispielsweise verwendet man konzentrierte Schwefelsäure (Gehalt an H₂SO₄ größer als 90 Gew.-%) und konzentrierte Wasserstoffperoxid-Lösung (Gehalt an H₂O₂ > 40 Gew.-%). Das ausfallende Jod kann dann abfiltriert werden, als weitere Reinigung ist lediglich eine Trocknung notwendig.

Das Verfahren kann zur Gewinnung oder Wiedergewinnung von Jod oder Jodid aus prinzipiell beliebigen Zusammensetzungen angewendet werden. Besonders gut geeignet ist es zur Behandlung von Zusammensetzungen, welche organische Verbindungen, insbesondere stickstoffhaltige organische Verbindungen, enthalten.

Die folgenden Beispiele sollen die Erfindung weiter erläutern, ohne sie in ihrem Umfang einzuschränken.

### Beispiel 1:

Wiedergewinnung von Jod aus einer Jod und Jodid enthaltenden Lösung.
Behandelt wurde eine Lösung, die Jod, Jodid, Monomethylformamid, Dimethylamidiniumsulfat, Methylamin und Ameisensäure enthielt. Der Gehalt an Jodid betrug etwa 25 Gew.-%, der Gehalt an Jod etwa 45 Gew.-%. 200 g dieser Lösung wurden mit 300 g Wasser verdünnt, um die Viskosität herabzusetzen. Zur Reduktion des elementaren Jods wurden 21,9 g Kalziumoxid zugegeben sowie unter intensivem Rühren 26,6 g Schwefeldioxid eingeleitet. Der Feststoff wurde dann abfiltriert und mit Wasser gewaschen. Der verbleibende, getrocknete Rückstand setzte sich wie folgt zusammen: 19,8 % Kalzium, 49,2 % Sulfat, 7,4 % Jodid und 0,1 % Sulfit.
Das Filtrat enthielt 17,3 Gew.-% Jodid, elementares Jod war nicht nachweisbar. Das Filtrat wurde über einen Anionenaustauscher vom Typ Serdolit AWG geleitet, im Eluat war kein Jodid mehr nachweisbar. Die Rückgewinnung des auf dem Anionenaustauscher gebundenen Jodids erfolgte durch Durchleiten von 2-normaler Natronlauge. Das Eluat enthielt 0,83 Gew.-% Jodid sowie 0,08 Gew.-% Chlorid. Das Eluat wurde dann an einem Rotationsverdampfer eingeengt, die stark alkalische Salzlösung wurde dann zur Neutralisation mit einem Kationenaustauscher vom Typ Lewatit S 100 behandelt. Das nunmehr saure Eluat enthielt 1,08 Gew.-% Jodid, weniger als 10 ppm Jod sowie 0,1 Gew.-% Chlorid. Erneut erfolgte am Rotationsverdampfer eine Aufkonzentration, bis die resultierende Salzlösung etwa 32 Gew.-% Jodid enthielt. Nach Zugabe von 2,8 g Schwefelsäure (96 Gew.-% H₂SO₄) und 1,9 g Wasserstoffperoxid (50 Gew.-% H₂O₂), beides unter Eiskühlung, fiel elementares Jod aus. Das auskristallisierte Jod wurde abfiltriert und über Phosphorpentoxid getrocknet. Der Jodgehalt betrug 98,8 % (Glühverlust: 0,25 %).

### Beispiel 2:

Wiedergewinnung von Jodid aus Jodid enthaltender Lösung.
Eine Lösung, welche Dimethylamidiniumjodid, Perfluoralkohole und Methylformamid enthielt, wurde wie in Beispiel 1 beschrieben behandelt. Auf den Zusatz von Kalziumoxid und SO₂ wurde verzichtet. Die weitere Durchführung und die Ergebnisse entsprachen denen des Beispiels 1.

## Patentansprüche

1. Verfahren zur Wiedergewinnung von Jod aus einer Jod und/oder Jodid enthaltenden Zusammensetzung, wobei man gegebenenfalls vorhandenes Jod zu Jodid reduziert, das Jodid aus wässriger Lösung mittels eines Jodid selektiv absorbierenden Anionenaustauschers abtrennt, das Jodid vom Anionenaustauscher durch Behandeln mit Lauge eluiert, die das eluierte Jodid enthaltende Lösung mit einem Kationenaustauscher behandelt, bis der pH-Wert kleiner als 4 ist, aus der behandelten Lösung das Jodid mit H₂O₂ zu Jod oxidiert und das gebildete Jod isoliert.

2. Verfahren nach Anspruch 1, dadurch gekennzeichnet, daß man die zu behandelnde wässrige Lösung auf einen Jodid-Gehalt von 10 bis 20 Gew.-% einstellt.

3. Verfahren nach Anspruch 1 oder 2, dadurch gekennzeichnet, daß man gegebenenfalls vorhandenes Jod mit CaO/SO₂ zu Jodid reduziert.

4. Verfahren nach einem der vorhergehenden Ansprüche, dadurch gekennzeichnet, daß man die Jodidabsorption mittels des Jodid selektiv absorbierenden Anionenaustauschers bei einem pH-Wert zwischen 6 und 8 durchführt.

5. Verfahren nach einem der vorhergehenden Ansprüche, dadurch gekennzeichnet, daß man zur Elution des am Anionenaustauscher gebundenen Jodids Natronlauge einer Konzentration von 5 bis 10 Gew.-% NaOH verwendet.

6. Verfahren nach einem der vorhergehenden Ansprüche, dadurch gekennzeichnet, daß man das Eluat durch Behandlung mit dem Kationenaustauscher auf einen pH-Wert zwischen 0 und 4 einstellt.

7. Verfahren nach einem der vorhergehenden Ansprüche, dadurch gekennzeichnet, daß man die mit dem Kationenaustauscher behandelte Lösung auf einen Jodidgehalt von 10 bis 32 Gew.-% einstellt.

8. Verfahren nach einem der vorhergehenden Ansprüche, dadurch gekennzeichnt, daß man organische Verbindungen, insbesondere N-organische Verbindungen enthaltende Lösungen behandelt.

## Claims

1. A method for the recovery of iodine from a composition containing iodine and/or iodide, in which iodine if present is reduced to iodide, the iodide is then separated out of aqueous solution by means of a anion exchanger which selectively absorbs iodide, the iodide is eluted from the anion exchanger by treatment with lye, the solution containing the eluted iodide is treated with a cation exchanger until the pH value is lower than 4, the iodide is oxidised from the treated solution with H₂O₂ to form iodine, and the resulting iodine is isolated.

2. A method according to Claim 1, characterised in that the aqueous solution which is to be treated is set to an iodide content of 10 to 20% by weight.

3. A method according to Claim 1 or 2, characterised in that any iodine present is reduced to iodide with CaO/SO₂.

4. A method according to one of the preceding Claims, characterised in that the iodide absorption is carried out at a pH value of between 6 and 8 by menas of the anion exchanger which selectively absorbs iodide.

5. A method according to one of the preceding Claims, characterised in that sodium hydroxide solution of a concentration of 5 to 10% by weight NaOH is used for eluting the iodide bound to the anion exchanger.

6. A method according to one of the preceding Claims, characterised in that the eluate is set to a pH value between 0 and 4 by treatment with the cation exchanger.

7. A method according to one of the preceding Claims, characterised in that the solution treated with the cation exchanger is set to an iodide content of 10 to 32% by weight.

8. A method according to one of the preceding Claims, characterised in that solutions containing organic compounds, in particular N-organic compounds, are treated.

## Revendications

1. Procédé de récupération de l'iode à partir d'une composition contenant de l'iode et/ou de l'iodure, selon lequel on réduit l'iode éventuellement présent en iodure, on sépare l'iodure de la solution aqueuse, à l'aide d'un échangeur d'anions absorbant sélectivement de l'iodure, on élue l'iodure, par traitement par de la lessive alcaline, de l'échangeur d'anions, on traite par un échangeur de cations la solution obtenue contenant l'iodure éluée, jusqu'à ce que la valeur du pH soit inférieure à 4, on oxyde l'iodure de la solution ainsi traitée en lui appliquant H₂O₂ pour obtenir de l'iode et l'on isole l'iode formé.

2. Procédé selon la revendication 1, caractérisé en ce qu'on ajuste à une teneur en iodure de 10 à 20 % en poids la solution aqueuse à traiter.

3. Procédé selon la revendication 1 ou 2, caractérisé en ce qu'on réduit à l'aide de CaO-SO₂ l'iode éventuellement présent en iodure.

4. Procédé selon l'une des revendications précédentes, caractérisé en ce qu'on effectue à une valeur du pH comprise entre 6 et 8 l'absorption de l'iodure à l'aide de l'échangeur d'anions absorbant sélectivement de l'iodure.

5. Procédé selon une des revendications précédentes, caractérisé en ce qu'on utilise, pour l'élution de l'iodure fixé sur l'échangeur d'anions, de la lessive de soude ayant une concentration de 5 à 10 % en poids de NaOH.

6. Procédé selon une des revendications précédentes, caractérisé en ce qu'on ajuste à une valeur du pH comprise entre 0 et 4 l'éluat, par traitement avec l'échangeur de cations.

7. Procédé selon une des revendications précédentes, caractérisé en ce qu'on ajuste à une teneur en iodure de 10 à 32 % en poids la solution traitée par l'échangeur de cations.

8. Procédé selon une des revendications précédentes, caractérisé en ce qu'on traite des solutions contenant des composés organiques, en particulier des composés organiques contenant de l'azote.
